# EUROPEAN PATENT SPECIFICATION

(11) **EP 3 078 575 B1**
(45) Date of publication and mention of the grant of the patent: **21.03.2018**
(21) Application number: 16151801.4
(22) Date of filing: 19.01.2016
(51) Int. Cl.: B62D 15/02

(54) **METHOD FOR AUTOMATICALLY PARKING A VEHICLE AND AUTOMATICALLY PARKING VEHICLE**
VERFAHREN ZUM AUTOMATISCHEN EINPARKEN EINES FAHRZEUGS UND AUTOMATISCHES EINPARKEN EINES FAHRZEUGS
PROCÉDÉ AUTOMATIQUE DE STATIONNEMENT D'UN VÉHICULE ET MISE EN STATIONNEMENT AUTOMATIQUE D'UN VÉHICULE

(30) Priority: 10.04.2015 IN 1898CH2015
(43) Date of publication of application: 12.10.2016
(73) Proprietor: Ford Global Technologies, LLC, Dearborn, MI 48126 (US)
(72) Inventor: Arndt, Christoph, 57583 Mörlen (DE); Stefan, Frederic, 52072 Aachen (DE); Gussen, Uwe, 52393 Hürtgenwald (DE)
(74) Representative: Dörfler, Thomas

(56) References cited:
- EP-A1- 2 374 661
- WO-A2-2014/027154
- DE-A1-102009 027 289
- DE-A1-102013 224 589

## Description

The invention relates to a method for automatically parking a vehicle and an automatically parking vehicle.

Generally, vehicle may be deployed with technology to assist drivers in parking. Such mechanisms provide convenience and safety for vehicle operators. In such cases, undue effort by the driver for accommodating the vehicle in an empty space may be avoided.

The parking assist mechanism where available, is relatively complicated in various conditions. Thereby, the conventional parking assistance systems are not scalable to multiple different parking situations which a driver may typically encounter, such as in a city.

One such system is described in German patent application DE 102009046676 A1 ('676 patent application). The '676 application describes a driver assistance system, which may be configured to provide multiple preferable trajectories, which are displayed to the driver. The driver may select a preferable trajectory from the various options that are provided.

The '676 patent application describes a parking assist system which automatically allows the vehicle to be parked without involving the operator. However, the mechanisms and approaches as described involve frequent gear shifting movements. For example, in order to park the vehicle, a combination of forward and reverse gear shifts may be required, when guiding the vehicle into the available parking space. It has been found that such mechanisms may result in more time taken for the vehicle to get parked. Moreover, frequent shifting of the transmission may result in unnecessary strain of the transmission system and may also affect the fuel efficiency.

EP 2 374 661 A1 discloses a parallel parking assistant system and method thereof, the parking assistant system including a first sensor configured to determine a first distance, a second sensor configured to determine a second distance, and a controller configured to provide commands as a function of the first and second determined distances. The commands include a first command configured to command a steering system to be in a clockwise position while the vehicle is moving in a reverse direction for a first reversing distance, a second command configured to command the steering system to be in a substantially straight position while the vehicle is moving in a reverse direction for a second reversing distance, and a third command configured to command the steering system to be in a counter-clockwise position while the vehicle is a moving in a reverse direction for a third reversing distance.

The present invention relates to a method for automatically parking a vehicle within an empty parking space as defined in the independent claim 1, as well as a vehicle having a parking assistance system as defined in the independent claim 6.

The following detailed description references the drawings, wherein:
FIG. 1 is a block diagram of a parking assistance system provided in a vehicle, as per an implementation of the present subject matter.
FIG. 2 is a schematic view of a parking environment, as per an implementation of the present subject matter.
FIG. 3A is a schematic view of a parking environment, as per another implementation of the present subject matter.
FIG. 3B is a schematic view of a parking environment, as per yet another implementation of the present subject matter.
FIG. 4 is a flow chart of a method for automatically parking the vehicle in an empty parking space, as per an implementation of the present subject matter.
FIG. 5 is a flow chart of the method for automatically parking the vehicle in the empty parking space, as per another implementation of the present subject matter.

This summary is provided to introduce concepts related to a method for automatically parking the vehicle in one step, and a vehicle having a parking assistance system. The concepts are further described below in the detailed description. This summary is not intended to identify essential features of the claimed subject matter nor is it intended for use in determining or limiting the scope of the claimed subject matter. The invention is set out in the appended set of claims. In one implementation, a method for automatically parking a vehicle in an empty parking space is described. To this end, a first limiting motion circle is defined, which is having a radius greater than or equal to a minimum turning radius. The first limiting motion circle is tangentially passing through a centre point of a rear axle of the vehicle. The first limiting motion circle is also tangential to a central axis of the vehicle passing through the centre point of the rear axle. Further, a second limiting motion circle is defined, which is having a radius greater than or equal to the minimum turning radius. The second limiting motion circle is tangentially passing through a central axis of an empty parking space such that path of the vehicle on initiation of a turn maneuver would not intersect the second limiting motion circle. Further, a parking trajectory for the vehicle is determined. A first portion of the parking trajectory is determined along a portion of the first limiting motion circle and a second portion is determined along a portion of the second limiting motion circle. A parking maneuver is initiated by controlling movement of the vehicle on the parking trajectory in such a manner that the central axis of the vehicle is tangential to the first portion of the parking trajectory. The movement of the vehicle is further controlled along the second portion in such a manner that the central axis of the vehicle is tangential to the second portion of the parking trajectory. The vehicle is positioned in the empty parking space in such a manner that the central axis of the vehicle aligns with the central axis of the empty parking space.

Thus, determining the parking trajectory based on the first limiting motion circle and the second limiting motion circle ensures that one step parking trajectory is determined. Additionally, controlling the movement of the vehicle on the one step parking trajectory ensures that issues in terms of frequent gear shifts (forward and reverse) are completely avoided. Thus, a fast, comfortable, and robust parking method is ensured taking into account the issues in reference to the frequent gear shifts.

As mentioned previously, automated or computer assisted parking may provide the convenience to driver who may not have to particularly be concerned whether the vehicle can be accommodated within an available space. However, such mechanisms may not consider the frequent gear changes or additional steering movements for parking the vehicle. As a result, different systems of the vehicle, such as the transmission or the steering system may be subjected to wear and tear, and also unnecessary stress. The frequent gear movement presents frequent occurrence of undesirable vehicle reactions, which may render maneuvering difficult. Further, frequent gear shifts may affect fuel efficiency of the vehicle. Also while executing any parking maneuver, objects which bound the parking space and also obstacles impeding the parking process located outside the parking space, such as moving objects may pose a collision threat.

To this end, approaches for parking a vehicle using a parking assistance system are described. The parking of the vehicle may be enabled using sensors installed on the vehicle. For implementing the parking of the vehicle, a parking space is initially identified. In continuation, a minimum turning radius of the vehicle is obtained.

Once the minimum turning radius is obtained, a first limiting motion circle is defined. The first limiting motion circle may be considered as a logical circle having a radius greater than or equal to the minimum turning radius. The first limiting motion circle may then be arranged or logically positioned in an area corresponding to the physical parking area. The first limiting motion circle is positioned such that it passes through a centre point of a rear axle of the vehicle. Further, the first limiting motion circle is positioned such that it is also tangential to the axis of the vehicle. Furthermore, a second limiting motion circle is also defined. The second limiting motion circle is defined having a radius greater than or equal to the minimum turning radius. The second limiting motion circle is also so defined such that it is positioned tangentially to a central axis of the empty parking space. Both the first limiting motion circle and the second limiting motion circle are defined in such a manner such that they do not overlap with each other when the vehicle initiates a parking maneuver.

On determining the first limiting motion circle and the second limiting motion circle, a parking trajectory for the vehicle is determined. The parking trajectory so determined is composed of a first portion which lies along a portion of the first limiting motion circle. The parking trajectory also includes a second portion which lies along a portion of the second limiting motion circle. The first and the second portion may be connected by an intermediate portion to form the complete trajectory. In one implementation, the intermediate portion may be a straight line tangential to both the first limiting motion circle and the second limiting motion circle.

Once the parking trajectory is determined, the parking maneuver is initiated. The vehicle is controlled in such a manner that an intersection point of the central axis and the rear axle of the vehicle moves along the parking trajectory. For example, while the parking maneuver is executed, the vehicle may be controlled such that the vehicle's axis is maintained tangential to the parking trajectory. As would be understood, while the parking maneuver is being executed the intersection point moves along the parking trajectory. As would be understood, where the portion of the trajectory is a line, the axis of the vehicle may be along the portion. As the vehicle approaches the available parking space, the central axis of the vehicle is aligned with the central axis of the empty parking space, and the vehicle is positioned in the empty parking space.

In another implementation, the parking trajectory may be determined based on a starting position and an end position on the first limiting motion circle and the second limiting motion circle, respectively. The parking trajectory may be generated by further determining one or more trajectories between the starting position and the end position. The outer limits for the possible parking trajectories may be determined by the first limiting motion circle and the second limiting motion circle. In such a case, the radii of all of the parking trajectories may be greater than the radius of the first limiting motion circle and the radius of the second limiting motion circle. Accordingly, the parking maneuver is initiated by controlling the movement of the vehicle on any one of the determined parking trajectories. Thereafter, the vehicle may be maneuvered into the empty parking space.

As can be understood, determining the parking trajectory based on the first limiting motion circle and the second limiting motion circle enables parking of the vehicle in a continuous motion without requiring any gear shifts. Additionally, controlling the movement of the vehicle on the one step parking trajectory ensures that issues in terms of gear shifts (forward and reverse) are completely avoided. Thereby, unnecessary effort to the driver or to the parking assistance system due to frequent gear movement is reduced or completely eliminated.

The above mentioned implementations are further described herein with reference to the accompanying figures. It should be noted that the description and figures relate to exemplary implementations, and should not be construed as a limitation to the present subject matter. It is also to be understood that various arrangements may be devised that, although not explicitly described or shown herein, embody the principles of the present subject matter. Moreover, all statements herein reciting principles, aspects, and embodiments of the present subject matter, as well as specific examples, are intended to encompass equivalents thereof.

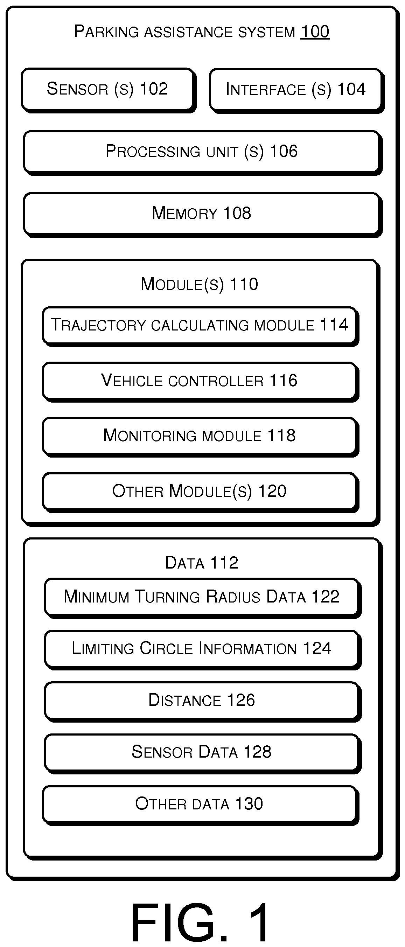

FIG. 1 is a block diagram of the parking assistance system 100 provided within the vehicle (not shown in the figure), as per an implementation of the present subject matter. The parking assistance system 100 is further referred to as the system 100 hereinafter. The system 100 includes a plurality of sensors (collectively referred to as sensor(s) 102). Each of the plurality of sensor(s) 102 may be coupled to one or more vehicle components.

Although the sensor(s) 102 have been described as being part of the system 100, the sensor(s) 102 may also be deployed outside, but in communication with the system 100. It should be noted that the manner in which the sensor(s) 102 is provided depends on the type of the vehicle components. Accordingly, each of the sensor(s) 102 may be provided with different components of the vehicle. Examples of such sensor(s) 102 include, but are not limited to electronic sensors and ultrasonic sensors. The sensor(s) 102 may be further coupled to the system 100 through a plurality of data communication interfaces (collectively referred to as interface(s) 104. The interface 104 may include a variety of interfaces, for example, interfaces for data input and output devices, referred to as I/O devices, storage devices, network devices, and the like, for communicatively associating the sensor(s) 102 with the system 100. The interface 104 facilitates communication between the sensor(s) 102 and the system 100.

The system 100 further in turn is coupled to the interface(s) 104. The communication mechanism between the system 100 and the interface(s) 104 may be implemented by mechanisms known in the art. For example, the connection between the system 100 and the interface(s) 104 may be implemented using one or more communication buses (not shown). The system 100 may further include a processing unit(s) 106 and a memory 108. The processing unit 106 can be a single processing unit or a number of units, all of which could include multiple computing units. The processing unit 106 may be implemented as one or more microprocessors, microcomputers, microcontrollers, digital signal processors, central processing units, state machines, logic circuitries, and/or any devices that manipulate signals, based on operational instructions. Among other capabilities, the processing unit(s) 106 is provided to fetch and execute computer-readable instructions stored in the memory 108. The memory 108 may be coupled to the processing unit 106 and may include any non-transitory computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the system 100 may include module(s) 110 and the data 112. The module(s) 110 and the data 112 may be coupled to the processing unit 106. The module(s) 110, amongst other things, can include routines, programs, objects, components, data structures, etc., which perform particular tasks or implement particular abstract data types. The modules 110 may also, be implemented as, signal processor(s), state machine(s), logic circuitries, and/or any other device or component that manipulate signals based on operational instructions.

In an implementation, the module(s) 110 can include a trajectory calculating module 114, a vehicle controller 116, a monitoring module 118 and other module(s) 120. The other module(s) 120 may include programs or coded instructions that supplement applications or functions performed by the system 100. Additionally, in said implementation, the data 112 includes minimum turning radius data 122, limiting circle information 124, distance(s) 126, sensor data 128, and other data 130. The data 112, amongst other things, may serve as a repository for storing data that is processed, received, or generated, as a result of the execution of one or more modules. Although the data 112 is shown internal to the system 100, it may be understood that the data 112 can reside in an external repository (not shown in the figure), which may be operably coupled to the system 100. The vehicle controller 116 may be implemented as a microcontroller, a microcomputer, and/or any device that manipulates signals based on operational instructions.

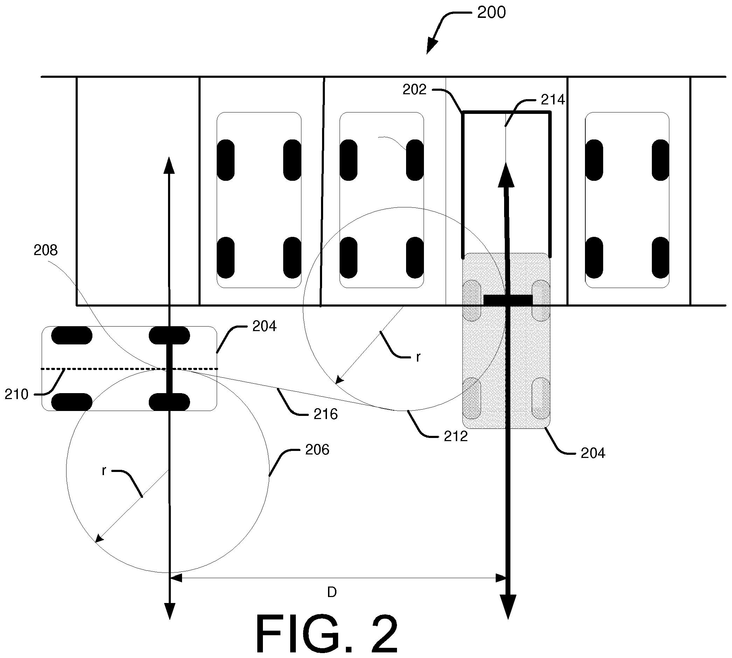

The operation and working of the system 100 is provided in conjunction with the illustration of a parking environment 200 as provided in FIG. 2. In one implementation of the present subject matter as depicted in FIG. 2, the sensor(s) 102 may identify the empty parking space 202 in between multiple parking spaces, in which a vehicle, such as vehicle 204 can be parked. The trajectory calculating module 114 may utilize the data 112 to determine a parking trajectory of the vehicle 204. For calculating the parking trajectory, the trajectory calculating module 114 obtains data regarding the dimensions of the vehicle 204 and the minimum turning radius data 122.

Once the minimum turning radius data 122 is obtained for the vehicle 204, the trajectory calculating module 114 (referred to as the module 114) defines a first limiting motion circle 206. The first limiting motion circle 206 is so defined such that the circumference of the first limiting motion circle 206 passes through a center point (depicted as point 208) of the rear axle of the vehicle 204 and is tangential to an axis, i.e., central axis 210 of the vehicle 204. The point 208 may also be considered as a point of intersection of the central axis 210 and the rear axle of the vehicle 204. The radius r of the first limiting motion circle 206 is determined. The radius r of the circle is such that the radius of the first limiting motion circle 206 is greater than or equal to the minimum turning radius. Once defined, the module 114 may virtually overlay the first limiting motion circle 206 over a representation of the parking area in which the parking space 202 is present without the first limiting motion circle 206 overlapping any of the other parked vehicles in the parking environment 200. Furthermore, the first limiting motion circle 206 may be so defined such that it lies on a side opposite to the side on which the parking space 202 is available.

On defining the first limiting motion circle 206, the trajectory calculating module 114 defines a second limiting motion circle 212. The second limiting motion circle 212 is so determined such that its radius is greater than or equal to the minimum turning radius 122. Furthermore, while defining the second limiting motion circle 212, the trajectory calculating module 114 positions the second limiting motion circle 212 in a manner such that the second limiting motion circle 212 is tangential to a central axis 214 of the empty parking space 202. In one implementation, the second limiting motion circle 212 is so defined such that it lies on a side of the axis 214 which is closer to the vehicle 204. The first limiting motion circle 206 and the second limiting motion circle 212 are so defined such that they do not overlap when the vehicle starts the parking maneuver. Further, a distance D to be travelled by the vehicle 204 before starting the parking maneuver is determined. The distance D is the longitudinal distance D between the centre point 208 of rear axle before the vehicle 204 starts parking maneuver and the central axis 214 of the empty parking space 202, provided that the longitudinal distance D may be equal to or greater than the sum of diameters of the first and second limiting motion circles 206, 212.

Once the first limiting motion circle 206 and the second limiting motion circle 212 are defined, the trajectory calculating module 114 determines a parking trajectory for automatically parking the vehicle 204 within the parking space 202 considering the first limiting motion circle 206 and the second limiting motion circle 212. In one implementation, the parking trajectory may include a first portion of the first limiting motion circle 206, and a second portion of the second limiting motion circle 212. The trajectory calculating module 114 may further determine an intermediate portion which connects the first portion and the second portion of the first limiting motion circle 206 and the second limiting motion circle 212, respectively.

In one implementation, the intermediate portion may include a straight line such that the intermediate portion is tangential to both the first limiting motion circle 206 and the second limiting motion circle 212. In another implementation, besides a straight line, any curve may be defined as the intermediate portion provided that the curve is tangential, at its point of contact, to the first limiting motion circle 206 and the second limiting motion circle 212. Once the parking trajectory 216 is obtained, the vehicle 204 may be controlled to be parked automatically within the empty parking space 202.

In operation, once the trajectory module 114 determines the parking trajectory 216, the vehicle controller 116 controls the motion of the vehicle 204 to park the vehicle 204 within the parking space 202. For example, the vehicle controller 116 may initiate the parking maneuver of the vehicle 204. The initiation of the parking maneuver may be in response to an input received from the driver of the vehicle 204. On receiving the input from the driver, one or more instructions stored in the other data 130 may be executed for carrying out the parking maneuver. On execution of the instructions, various control mechanisms of the vehicle 204 may be activated for carrying out the parking maneuver. While the parking maneuver is being executed, the vehicle controller 116 controls the motion of the vehicle 204 along the parking trajectory 216. For example, along the first portion of the first limiting motion circle 206, the vehicle controller 116 may control the motion of the vehicle 204, such that its axis 210 may be maintained tangential to the first portion of the first limiting motion circle 206. The motion of the vehicle 204 may be maintained by controlling the steering mechanism of the vehicle 204. In the present example, the vehicle controller 116 may negotiate a turn (using the steering mechanism) so that the motion of the vehicle 204 is maintained along the first portion.

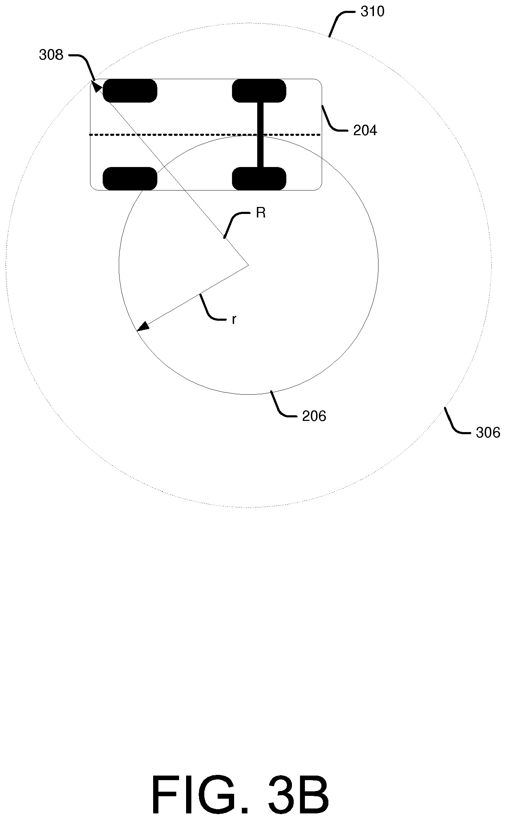

Furthermore, as the vehicle 204 moves from the first portion over to the intermediate portion, the vehicle controller 116 may control the vehicle 204 so as to maintain its motion along the intermediate portion. Finally, once the vehicle 204 reaches the second portion of the second limiting motion circle 212, the vehicle controller 116 may maintain the axis 210 of the vehicle 204 to be tangential to the second portion. The path of the vehicle 204 may be maintained using the steering mechanism of the vehicle 204. As the vehicle 204 progresses along the second portion, the vehicle controller 116 may continuously monitor as the vehicle 204 approaches the axis 214 of the parking space 202. When in close proximity to the axis 214, the vehicle controller 116 may further control the motion (say using the steering mechanism) to align the vehicle 204 along the axis 214 of the parking space 202. As can be understood, the parking maneuver thus executed is achieved in a smooth uninterrupted manner. Furthermore, the parking maneuver is free from gear shifts. According to the invention in conjunction with parking environment 300a of FIG. 3B, the trajectory calculating module 114 defines an additional, a third limiting motion circle 306. The third limiting motion circle 300a is considered as a circle swept by the outermost point of the body of vehicle 204. The value of the radius of the third limiting motion circle 306 may be stored in other data 130. The radius of the third limiting motion circle 306 may be predefined for different types of vehicles. The radius of the third limiting motion circle 306 is an outer turning radius R of the vehicle, wherein the outer turning radius R is a distance between the centre of the first limiting motion circle 206 and the outermost protruding part 308 of the vehicle 204. The third limiting motion circle 306 is used by the system 100 for possible occurrence of collisions if a turn is to be negotiated. During entire parking maneuver, wherein the monitoring area 310 is monitored during the parking maneuver for avoiding collision with moving objects, such as other vehicles. The possibilities of collision arises due to the incoming vehicles which are approaching the vehicle 204, or may be due to other stationary objects which may be positioned within the parking environment 300a. Therefore, a monitoring area 310 is determined within the third limiting motion circle 306 with respect to changing position of the vehicle 204. The monitoring module 118 may continuously monitor the presence of any other object within the monitoring area 310 defined by the third limiting motion circle 306. In case any presence is detected, the monitoring module 118 may communicate with the module 114 and the parking maneuver may be terminated.

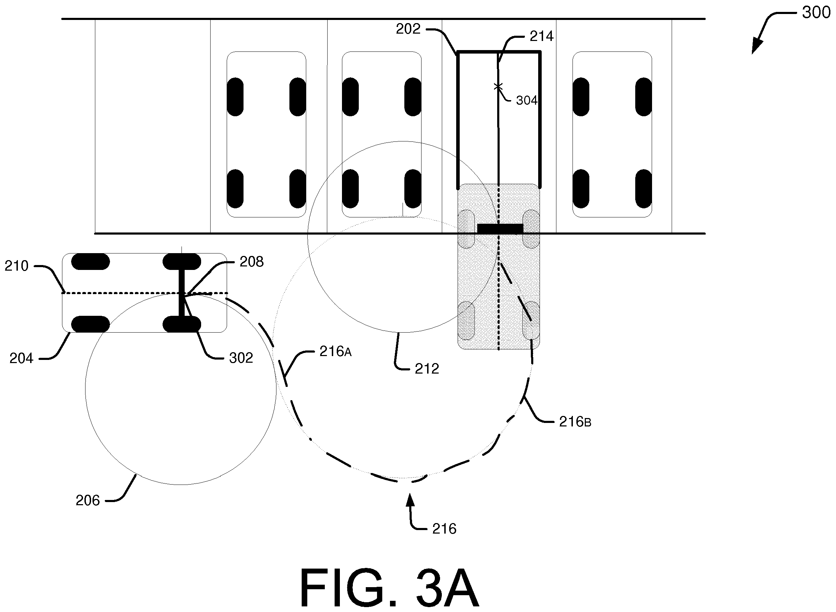

Another implementation is further described in conjunction with another parking environment 300 in FIG. 3A. As per the present implementation, the trajectory calculating module 114 may determine the parking trajectory with respect to a starting position 302 and an end position 304. The starting position 302 may be any point on the first limiting motion circle 206 from where the parking maneuver may be initiated. The end position 304 may be any point on the any point on the axis 214 of the empty parking space 202 at which the parking maneuver is completed, and the vehicle 204 is parked within the parking space 202. The trajectory module 114 may determine the parking trajectory, such as the parking trajectory 216, which may originate from the starting position 302 and end at the end position 304.

In the present implementation, the module 114 may determine parking trajectory 216 by obtaining one or more curved paths. The curved paths thus obtained may be so selected such that their radius of curvature is greater than or equal to the minimum turning radius 122 of the vehicle 204. For example, the parking trajectory 216 may include a first portion 216a and a second portion 216b. The first portion 216a may be such that it would require the vehicle 204 to be turned in one direction. Similarly, along the second portion 216b, the vehicle 204 would have to turn in a direction opposite to the direction in which the vehicle 204 would have to be turned when moving along the first portion 216a.

Once obtained, the module 114 may generate the parking trajectory 216 based on the paths 216a, 216b. On generating the parking trajectory 216, the parking maneuver may be initiated. In operation, the vehicle controller 116 may control the motion of the vehicle 204 along the parking trajectory 216. For example, the vehicle controller 116 may through the steering mechanism initiate a left turn while maintaining the vehicle 204 along the first path 216a. As the vehicle 204 moves along the first path 216a, the vehicle controller 116 may further control the vehicle 204 and initiate a right turn to move along the vehicle 204 along the second path 216b. As the vehicle 204 approaches the axis 214 of the parking space 202, the vehicle controller 116 may further control the steering mechanism of the vehicle 204 so as to align the vehicle 204 along the axis 214 (of the parking space). As the vehicle 204 is aligned with the axis 214, it may be further controlled so as to move the vehicle 204 into the parking space 202, and complete the parking maneuver.

In an implementation, in the above said parking environment, multiple parking spaces may exist. Out of those multiple parking spaces, one empty parking space 202 is identified by sensor(s) 102 of Fig. 1 installed on the vehicle 204. The identification of the empty parking space 202 may be based on dimensions of the vehicle 204. The identification may be carried out by means of ultrasonic sensors. Furthermore, other different types of sensors may also be used without deviating from the scope of the present subject matter.

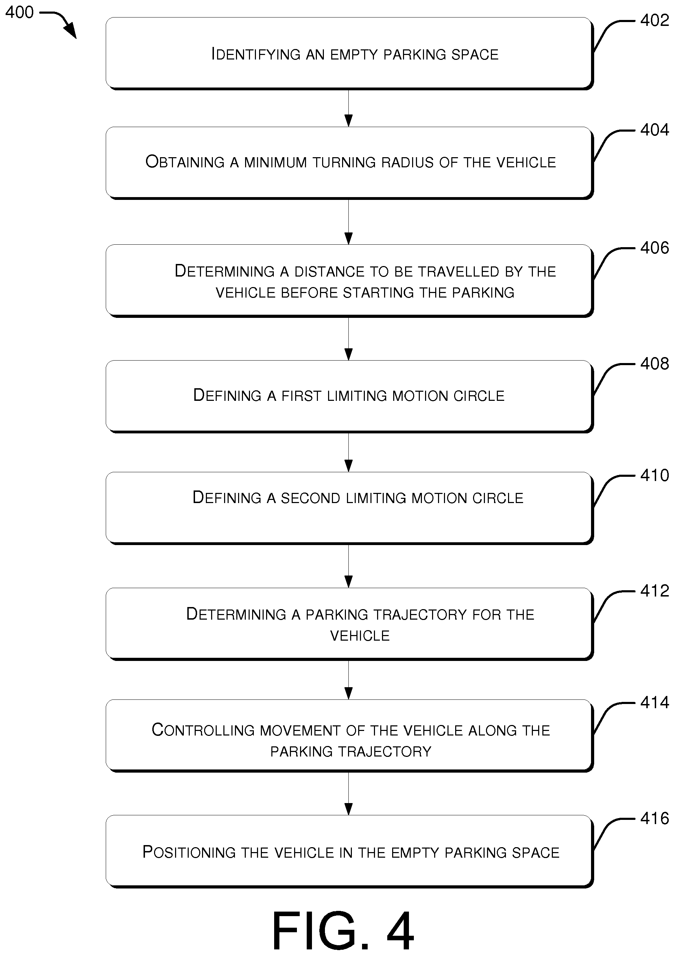

FIG. 4 is a flow chart of a method 400 for automatically parking a vehicle 204 in one step, as per an implementation of the present subject matter. The order in which the method is described is not intended to be construed as a limitation, and any number of the described method blocks may be combined in any order to implement the aforementioned methods, or an alternative method. Furthermore, method 400 may be implemented by processing resource or processing unit(s) through any suitable hardware, non-transitory machine readable instructions, or combination thereof.

It may also be understood that method 400 may be performed by the system as depicted in FIG. 1. Furthermore, the method 400 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media. Although, the method 400 is described below with reference to the system 100 as described above, other suitable systems for the execution of these methods can be utilized. Additionally, implementation of these methods is not limited to such examples.

At block 402, an empty parking space 202 may be identified. For example, the system 100 identifies an available or empty parking space 202 using one or more sensor(s) 102. The sensor(s) 102 may be implemented within the system 100 or may be implemented within the vehicle 204, and coupled to the system 100.
At block 404, the minimum turning radius 122 of the vehicle 204 is obtained. For example, the minimum turning radius 122 may be predefined for a particular vehicle, such as vehicle 204. In one example, the minimum vehicle radius 122 may be stored in the system 100.

At block 406, a distance D to be travelled by the vehicle 204 before starting the parking is determined. The distance D may be the longitudinal distance D between the centre point 208 of rear axle before the vehicle 204 starts parking maneuver and the central axis 214 of the empty parking space 202, provided that the longitudinal distance D may be equal to or greater than the sum of diameters of the first and second limiting motion circles 206, 212.

At block 408, the first limiting motion circle 206 is defined by the trajectory calculating module 114. The first limiting motion circle 206 may pass through the centre point 208 of the rear axle. The first limiting motion circle 206 also passes through a tangential point of the central axis 210 of the vehicle 204 to the centre point 208 of the rear axle. The radius r of the first limiting motion circle 206 is greater than or equal to the minimum turning radius.

At block 410, the second limiting motion circle 212 is defined by the trajectory calculating module 114. The circumference of the second limiting motion circle 212 tangentially passes through the central axis 214 of the empty parking space 202. In one example, the radius of the second limiting motion circle 212 is greater than or equal to the minimum turning radius 122.

At block 412, the parking trajectory 216 is determined by the trajectory calculating module 114, in which the first portion of the parking trajectory 216 is determined along the first limiting motion circle 206 and the second portion of the parking trajectory 216 is determined along the second limiting motion circle 212. Further, the intermediate portion of the parking trajectory between the portions of the first limiting motion circle 206 and the second limiting motion circle 212 is determined. The intermediate portion tangentially connects the first portion of the parking trajectory 216 and second portion of the parking trajectory 216. In other words, the intermediate portion tangentially connects the portions of the first limiting motion circle 206 and the second limiting motion circle 212. Furthermore, the third portion of the parking trajectory 216 is determined, which tangentially passes the second limiting motion circle 212. The third portion is further directed along the central axis 214 of the empty parking space 202.

At block 414, the parking maneuver is initiated along the determined parking trajectory 216. The vehicle controller 116 controls the movement of the vehicle 204 along the first portion of the parking trajectory 216, in which the vehicle controller 116 tangentially controls the movement of the central axis 210 of the vehicle 204 along the portion of the first limiting motion circle 206. The vehicle controller 116 then tangentially controls the movement of the central axis 210 of the vehicle 204 from the first limiting motion circle 206 to the second limiting motion circle 212 along the intermediate portion of the parking trajectory 216. Further, the vehicle controller 116 controls the movement of the vehicle 204 along the second portion of the parking trajectory 216, in which the vehicle controller 116 tangentially controls the movement of the central axis 210 of the vehicle 204 along the portion of the second limiting motion circle 212. Finally, the vehicle controller 116 tangentially controls the movement of the central axis 210 of the vehicle 204 from the second limiting motion circle 212 to a point where the central axis 210 of the vehicle 204 aligns with the central axis 214 of the empty parking space 202 along the third portion of the parking trajectory 216.

At block 416, the vehicle 204 is positioned in the empty parking space 202 by the vehicle controller 116 such that that the central axis 210 of the vehicle 204 aligns with the central axis 214 of the empty parking space 202.

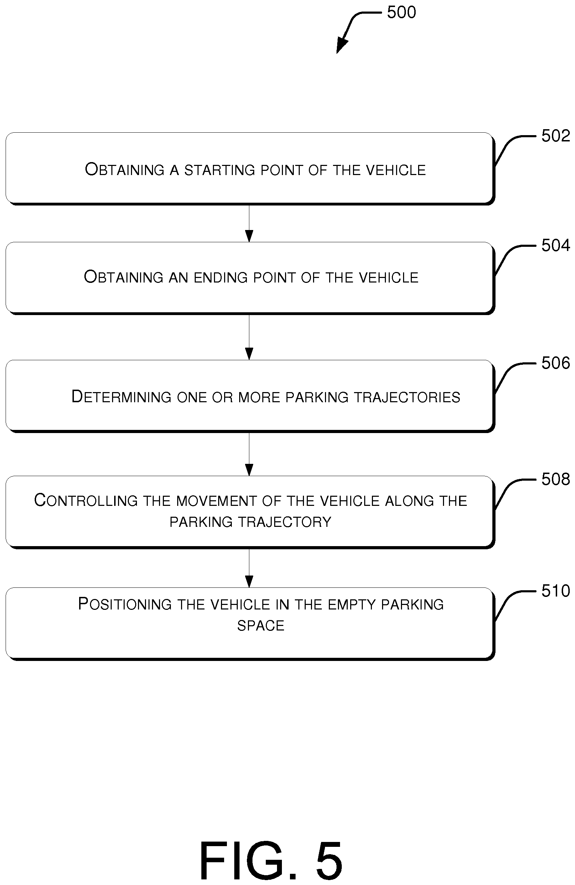

FIG. 5 is a flow chart of the method 500 for automatically parking the vehicle 204 in one step, as per another implementation of the present subject matter. The order in which the method is described is not intended to be construed as a limitation, and any number of the described method blocks may be combined in any order to implement the aforementioned methods, or an alternative method. Furthermore, method 500 may be implemented by processing resource or processing unit(s) through any suitable hardware, non-transitory machine readable instructions, or combination thereof.

At block 502, the starting point 302 of the vehicle 204 during the parking maneuver is obtained, which is detected by the trajectory calculating module 114 as the tangential point of the first limiting motion circle 206 to the central axis 210 of the vehicle 204.

At block 504, an ending point 304 of the vehicle 204 during the parking maneuver is detected by the trajectory calculating module 114 as the position of the centre point 208 of the rear axle, when the central axis 210 of the vehicle 204 aligns with the central axis 214 of the empty parking space 202.

At block 506, one or more parking trajectories from the starting point 302 to the ending point 304 of the vehicle 204 during the parking maneuver are determined by the trajectory calculating module 114. The parking trajectories are determined such that the central axis 210 of the vehicle 204 tangentially passes the circumference of the second limiting motion circle 212 and the central axis 214 of the empty parking space 202.

At block 508, the parking maneuver may be initiated by the vehicle controller 116, in which the movement of the central axis 210 of the vehicle 204 may be controlled along the at least one parking trajectory 216. The central axis 210 of the vehicle 204 may move outside of the first and second limiting motion circles 206, 212. Further, the central axis 210 of the vehicle 204 tangentially moves along the at least one parking trajectory 216 such that the central axis 210 of the vehicle 204 tangentially passes through the second limiting motion circle 212.

At block 510, the vehicle 204 is positioned in the empty parking space 202 by the vehicle controller 116 such that that the central axis 210 of the vehicle 204 aligns with the central axis 214 of the empty parking space 202.

Although examples for the present disclosure have been described in language specific to structural features and/or methods, it should be understood that the appended claims are not necessarily limited to the specific features or methods described. Rather, the specific features and methods are disclosed and explained as examples of the present disclosure.

## Claims

1. A method for automatically parking a vehicle (204) within an empty parking space (202), the method comprising:
defining a first limiting motion circle (206) having a radius greater than or equal to a minimum turning radius of the vehicle (204) such that the first limiting motion circle (206) passes through a centre point (208) of a rear axle of the vehicle (204), and is tangential to a central axis (210) of the vehicle (204);
defining a second limiting motion circle (212) having a radius (r) greater than or equal to the minimum turning radius of the vehicle (204) such that the second limiting motion circle (212) is tangential to a central axis (214) of the empty parking space (202) such that path of the vehicle (204) on initiation of a turn maneuver would not intersect the second limiting motion circle (212);
determining a parking trajectory (216) for the vehicle (204), wherein a first portion of the parking trajectory (216) is along a portion of the first limiting motion circle (206) and a second portion of the parking trajectory (216) is along a portion of the second limiting motion circle (212);
while initiating the parking maneuver, controlling movement of the vehicle (204) such that the central axis (210) of the vehicle (204) is tangential to the first portion of the parking trajectory (216);
further controlling the movement of the vehicle (204) along the second portion such that the central axis (210) of the vehicle (204) is tangential to the second portion of the parking trajectory (216); and
positioning the vehicle (204) in the empty parking space (202), wherein the central axis (210) of the vehicle (204) aligns with the central axis (214) of the empty parking space (202);
**characterized in that**
the method further comprises
obtaining an outer turning radius (R) of the vehicle (204), wherein the outer turning radius (R) is a distance between a centre point of the first limiting motion circle (206) and an outermost protruding part (308) of the vehicle (204); defining a third limiting motion circle (306) with the outer turning radius (R) for avoiding collision with objects positioned in vicinity of the vehicle (204); and
while initiating the parking maneuver, determining a monitoring area (310) within the third limiting motion circle (306) with respect to changing position of the vehicle (204) during entire parking maneuver, wherein the monitoring area (310) is monitored during the parking maneuver for avoiding collision with moving objects, such as other vehicles.

2. Method as claimed in claim 1, the method comprising:
determining an intermediate portion of the parking trajectory (216), wherein the intermediate portion is tangentially connecting the first portion of the parking trajectory (216) and the second portion of the parking trajectory (216); and
controlling the movement of the vehicle (204) along the intermediate portion of the parking trajectory (216).

3. Method as claimed in claim 1 or 2, the method further comprising:
determining a third portion of the parking trajectory, wherein the third portion is tangentially passing the second portion of the parking trajectory (216) and further directed along the central axis (214) of the empty parking space (202); and
controlling the movement of the vehicle (204) along the third portion of the parking trajectory (216) until the vehicle (204) is positioned in the empty parking space (202).

4. Method as claimed in one of the preceding claims, the method comprising:
determining a distance (D) to be travelled by the vehicle (204) before starting the parking, wherein the distance (D) is a longitudinal distance between the centre point (208) of the rear axle and the central axis (214) of the empty parking space (202), and wherein the longitudinal distance is greater than or equal to twice the diameter of the first limiting motion circle (206) or the second limiting motion circle (212).

5. Method as claimed in one of the preceding claims, wherein the first limiting motion circle (206) and the second limiting motion circle (212) are not overlapping each other.

6. Vehicle having a parking assistance system (100), the system (100) comprising:
sensors (102) to identify an empty parking space (202);
a trajectory calculating module (114), which is to:
obtain a minimum turning radius of the vehicle (204);
define a first limiting motion circle (206) having a radius greater than or equal to a minimum turning radius of the vehicle (204) such that the first limiting motion circle (206) passes through a centre point (208) of a rear axle of the vehicle (204) and is tangential to a central axis (210) of the vehicle (204);
define a second limiting motion circle (212) having a radius greater than or equal to the minimum turning radius of the vehicle (204) such that the second limiting motion circle (212) is tangential to a central axis (214) of the empty parking space (202); and
determine a parking trajectory (216) for the vehicle (204), wherein a first portion of the parking trajectory (216) is along a portion of the first limiting motion circle (206) and a second portion of the parking trajectory (216) is along a portion of the second limiting motion circle (212);
a vehicle controller (106), which is to:
while initiating parking maneuver, control movement of the vehicle (204) such that the central axis (210) of the vehicle (204) is tangential to the first portion of the parking trajectory (216);
further control the movement of the vehicle (204) along the second portion such that the central axis (210) of the vehicle (204) is tangential to the second portion of the parking trajectory (216); and
position the vehicle (204) in the empty parking space (202), wherein the central axis (210) of the vehicle (204) aligns with the central axis (214) of the empty parking space (202);
**characterized in that**
the trajectory calculating module (114) is further to, obtain an outer turning radius (R) of the vehicle (204), wherein the outer turning radius (R) is a distance between a centre point of the first limiting motion circle (206) and an outermost protruding part (308) of the vehicle (204); and define a third limiting motion circle (306) with the outer turning radius (R) for avoiding collision with objects positioned in vicinity of the vehicle (204), and; while initiating the parking maneuver, determine a monitoring area (310) within the third limiting motion circle (306) with respect to changing position of the vehicle (204) during entire parking maneuver, and further the system (100) comprising a monitoring module (118) to monitor the monitoring area (310) during the parking maneuver for avoiding collision with moving objects, such as other vehicles.

7. Vehicle according to claim 6, wherein the trajectory calculating module (114) is to determine an intermediate portion of the parking trajectory (216), wherein the intermediate portion is tangentially connecting the first portion of the parking trajectory (216) and the second portion of the parking trajectory (216), and wherein the vehicle controller (106) is also configured to control the movement of the vehicle (204) along the intermediate portion of the parking trajectory (216).

8. Vehicle according to claim 6 or 7, wherein the trajectory calculating module (114) is further to determine a third portion of the parking trajectory (216), wherein the third portion is tangentially passing the second portion of the parking trajectory (216) and further directed along the central axis (214) of the empty parking space (202), and wherein the vehicle controller (106) is further configured to control the movement of the vehicle (204) along the third portion of the parking trajectory (216) until the vehicle (204) is positioned in the empty parking space (202)

9. Vehicle according to one of the claims 6 to 8, wherein the trajectory calculating module (114) is further to:
determine one or more parking trajectories from a starting point (302) of the vehicle (204) to an end point (304) of the vehicle (204) such that the one or more parking trajectories are located outside of the first limiting motion circle (206) and the second limiting motion circle (212).

10. Vehicle according to one of the claims 6 to 9, wherein the vehicle controller (106) is further to:
while initiating the parking maneuver, control the movement of the vehicle (204) on the at least one parking trajectory (216) such that the central axis (210) of the vehicle (204) is tangentially passing through the second limiting motion circle (212); and
position the vehicle (204) in the empty parking space (202), wherein the central axis (210) of the vehicle (204) aligns with the central axis (214) of the empty parking space (202).

## Patentansprüche

1. Verfahren zum automatischen Einparken eines Fahrzeugs (204) in eine leere Parklücke (202), wobei das Verfahren Folgendes umfasst:
Definieren eines ersten Begrenzungsbewegungskreises (206) mit einem Radius, der größer gleich einem Mindestwenderadius des Fahrzeugs (204) ist, derart, dass der erste Begrenzungsbewegungskreis (206) durch einen Mittelpunkt (208) einer Hinterradachse des Fahrzeugs (204) verläuft und tangential zu einer mittleren Achse (210) des Fahrzeugs (204) ist;
Definieren eines zweiten Begrenzungsbewegungskreises (212) mit einem Radius (r) größer gleich dem Mindestwenderadius des Fahrzeugs (204), derart, dass der zweite Begrenzungsbewegungskreis (212) tangential zu einer mittleren Achse (214) der leeren Parklücke (202) ist, derart, dass der Weg des Fahrzeugs (204) bei Einleiten eines Wendemanövers den zweiten Begrenzungsbewegungskreis (212) nicht schneiden würde;
Bestimmen einer Einparkbahn (216) für das Fahrzeug (204), wobei ein erster Abschnitt der Einparkbahn (216) entlang einem Abschnitt des ersten Begrenzungsbewegungskreises (206) verläuft und ein zweiter Abschnitt der Einparkbahn (216) entlang einem Abschnitt des zweiten Begrenzungsbewegungskreises (212) verläuft;
beim Einleiten des Einparkmanövers Steuern der Bewegung des Fahrzeugs (204) derart, dass die mittlere Achse (210) des Fahrzeugs (204) tangential zum ersten Teil der Einparkbahn (216) ist;
weiter Steuern der Bewegung des Fahrzeugs (204) entlang dem zweiten Abschnitt, derart, dass die mittlere Achse (210) des Fahrzeugs (204) tangential zum zweiten Abschnitt der Einparkbahn (216) ist; und
Positionieren des Fahrzeugs (204) in der leeren Parklücke (202), wobei die mittlere Achse (210) des Fahrzeugs (204) auf die mittlere Achse (214) der leeren Parklücke (202) ausgerichtet wird;
**dadurch gekennzeichnet, dass**
das Verfahren ferner Folgendes umfasst:
Erhalten eines Außenwenderadius (R) des Fahrzeugs (204), wobei der Außenwenderadius (R) eine Distanz zwischen einem Mittelpunkt des ersten Begrenzungsbewegungskreises (206) und einem äußersten vorragenden Teil (308) des Fahrzeugs (204) ist;
Definieren eines dritten Begrenzungsbewegungskreises (306) mit dem Außenwenderadius (R) zum Vermeiden einer Kollision mit in der Nähe des Fahrzeugs (204) positionierten Objekten; und
beim Einleiten des Einparkmanövers Bestimmen eines Überwachungsbereichs (310) in dem dritten Begrenzungsbewegungskreis (306) bezüglich Änderung der Position des Fahrzeugs (204) während des gesamten Einparkmanövers, wobei der Überwachungsbereich (310) während des Einparkmanövers überwacht wird, um eine Kollision mit sich bewegenden Objekten, wie zum Beispiel anderen Fahrzeugen, zu vermeiden.

2. Verfahren nach Anspruch 1, wobei das Verfahren Folgendes umfasst:
Bestimmen eines Zwischenabschnitts der Einparkbahn (216), wobei der Zwischenabschnitt den ersten Abschnitt der Einparkbahn (216) und den zweiten Abschnitt der Einparkbahn (216) tangential verbindet; und
Steuern der Bewegung des Fahrzeugs (204) entlang dem Zwischenabschnitt der Einparkbahn (216).

3. Verfahren nach Anspruch 1 oder 2, wobei das Verfahren ferner Folgendes umfasst:
Bestimmen eines dritten Abschnitts der Einparkbahn, wobei der dritte Abschnitt den zweiten Abschnitt der Einparkbahn (216) tangential passiert und weiter entlang der mittleren Achse (214) der leeren Parklücke (202) gerichtet ist; und
Steuern der Bewegung des Fahrzeugs (204) entlang dem dritten Abschnitt der Einparkbahn (216), bis das Fahrzeug (204) in der leeren Parklücke (202) positioniert ist.

4. Verfahren nach einem der vorhergehenden Ansprüche, wobei das Verfahren Folgendes umfasst:
Bestimmen einer von dem Fahrzeug (204) vor Beginnen des Einparkens zurückzulegenden Distanz (D), wobei die Distanz (D) eine longitudinale Distanz zwischen dem Mittelpunkt (208) der Hinterradachse und der mittleren Achse (214) der leeren Parklücke (202) ist und wobei die longitudinale Distanz größer gleich dem doppelten Durchmesser des ersten Begrenzungsbewegungskreises (206) oder des zweiten Begrenzungsbewegungskreises (212) ist.

5. Verfahren nach einem der vorhergehenden Ansprüche, wobei sich der erste Begrenzungsbewegungskreis (206) und der zweite Begrenzungsbewegungskreis (212) nicht überlappen.

6. Fahrzeug mit einem Einparkunterstützungssystem (100), wobei das System (100) Folgendes umfasst:
Sensoren (102) zum Identifizieren einer leeren Parklücke (202);
ein Bahnberechnungsmodul (114) zum:
Erhalten eines Mindestwenderadius des Fahrzeugs (204) ;
Definieren eines ersten Begrenzungsbewegungskreises (206) mit einem Radius größer gleich einem Mindestwenderadius des Fahrzeugs (204), derart, dass der erste Begrenzungsbewegungskreis (206) durch einen Mittelpunkt (208) der Hinterradachse des Fahrzeugs (204) verläuft und tangential zu einer mittleren Achse (210) des Fahrzeugs (204) ist;
Definieren eines zweiten Begrenzungsbewegungskreises (212) mit einem Radius (r) größer gleich dem Mindestwenderadius des Fahrzeugs (204), derart, dass der zweite Begrenzungsbewegungskreis (212) tangential zu einer mittleren Achse (214) der leeren Parklücke (202) ist; und
Bestimmen einer Einparkbahn (216) für das Fahrzeug (204), wobei ein erster Abschnitt der Einparkbahn (216) entlang einem Abschnitt des ersten Begrenzungsbewegungskreises (206) verläuft und ein zweiter Abschnitt der Einparkbahn (216) entlang einem Abschnitt des zweiten Begrenzungsbewegungskreises (212) verläuft;
eine Fahrzeugsteuerung (106) zum:
beim Einleiten des Einparkmanövers Steuern der Bewegung des Fahrzeugs (204), derart, dass die mittlere Achse (210) des Fahrzeugs (204) tangential zum ersten Teil der Einparkbahn (216) ist;
weiter Steuern der Bewegung des Fahrzeugs (204) entlang dem zweiten Abschnitt, derart, dass die mittlere Achse (210) des Fahrzeugs (204) tangential zum zweiten Abschnitt der Einparkbahn (216) ist; und
Positionieren des Fahrzeugs (204) in der leeren Parklücke (202), wobei die mittlere Achse (210) des Fahrzeugs (204) auf die mittlere Achse (214) der leeren Parklücke (202) ausgerichtet wird;
**dadurch gekennzeichnet, dass**
das Bahnberechnungsmodul (114) ferner einen Außenwenderadius (R) des Fahrzeugs (204) erhalten soll, wobei der Außenwenderadius (R) eine Distanz zwischen einem Mittelpunkt des ersten Begrenzungsbewegungskreises (206) und einem äußersten vorragenden Teil (308) des Fahrzeugs (204) ist; und einen dritten Begrenzungsbewegungskreis (306) mit dem Außenwenderadius (R) zum Vermeiden einer Kollision mit in der Nähe des Fahrzeugs (204) positionierten Objekten definieren soll; und beim Einleiten des Einparkmanövers einen Überwachungsbereich (310) in dem dritten Begrenzungsbewegungskreis (306) bezüglich Änderung der Position des Fahrzeugs (204) während des gesamten Einparkmanövers bestimmen soll, und wobei das System (100) ferner ein Überwachungsmodul (118) zum Überwachen des Überwachungsbereichs (310) während des Einparkmanövers zum Vermeiden einer Kollision mit sich bewegenden Objekten, wie zum Beispiel anderen Fahrzeugen, umfasst.

7. Fahrzeug nach Anspruch 6, wobei das Bahnberechnungsmodul (114) einen Zwischenabschnitt der Einparkbahn (216) bestimmen soll, wobei der Zwischenabschnitt den ersten Abschnitt der Einparkbahn (216) und den zweiten Abschnitt der Einparkbahn (216) tangential verbindet; und wobei die Fahrzeugsteuerung (106) auch dazu konfiguriert ist, die Bewegung des Fahrzeugs (204) entlang dem Zwischenabschnitt der Einparkbahn (216) zu steuern.

8. Fahrzeug nach Anspruch 6 oder 7, wobei das Bahnberechnungsmodul (114) ferner einen dritten Abschnitt der Einparkbahn (216) bestimmen soll, wobei der dritte Abschnitt den zweiten Abschnitt der Einparkbahn (216) tangential passiert und weiter entlang der mittleren Achse (214) der leeren Parklücke (202) gerichtet ist; und wobei die Fahrzeugsteuerung (106) ferner dazu konfiguriert ist, die Bewegung des Fahrzeugs (204) entlang dem dritten Abschnitt der Einparkbahn (216) zu steuern, bis das Fahrzeug (204) in der leeren Parklücke (202) positioniert ist.

9. Fahrzeug nach einem der Ansprüche 6 bis 8, wobei das Bahnberechnungsmodul (114) ferner:
eine oder mehrere Parkbahnen von einem Startpunkt (302) des Fahrzeugs (204) zu einem Endpunkt (304) des Fahrzeugs (204) bestimmen soll, derart, dass die eine oder die mehreren Parkbahnen außerhalb des ersten Begrenzungsbewegungskreises (206) und des zweiten Begrenzungsbewegungskreises (212) positioniert sind.

10. Fahrzeug nach einem der Ansprüche 6 bis 9, wobei die Fahrzeugsteuerung (106) ferner:
beim Einleiten des Einparkmanövers die Bewegung des Fahrzeugs (204) auf der mindestens einen Einparkbahn (216) derart steuern soll, dass die mittlere Achse (210) des Fahrzeugs (204) tangential durch den zweiten Begrenzungsbewegungskreis (212) verläuft; und
das Fahrzeug (204) in der leeren Parklücke (202) positionieren soll, wobei die mittlere Achse (210) des Fahrzeugs (204) auf die mittlere Achse (214) der leeren Parklücke (202) ausgerichtet wird.

## Revendications

1. Procédé de mise en stationnement automatique d'un véhicule (204) dans une place de stationnement libre (202), le procédé comprenant :
définir un premier cercle de mouvement limitatif (206) présentant un rayon supérieur ou égal à un rayon de braquage minimal du véhicule (204) de telle sorte que le premier cercle de mouvement limitatif (206) passe par un point médian (208) d'un essieu arrière du véhicule (204), et soit tangentiel à un axe médian (210) du véhicule (204) ;
définir un deuxième cercle de mouvement limitatif (212) présentant un rayon (r) supérieur ou égal au rayon de braquage minimal du véhicule (204) de telle sorte que le deuxième cercle de mouvement limitatif (212) soit tangentiel à un axe médian (214) de la place de stationnement libre (202) de telle sorte que le trajet du véhicule (204), lors de l'amorce d'une manoeuvre de virage, n'intersecte pas le deuxième cercle de mouvement limitatif (212) ;
déterminer une trajectoire de mise en stationnement (216) pour le véhicule (204), une première partie de la trajectoire de mise en stationnement (216) se trouvant le long d'une partie du premier cercle de mouvement limitatif (206) et une deuxième partie de la trajectoire de mise en stationnement (216) se trouvant le long d'une partie du deuxième cercle de mouvement limitatif (212) ;
lors de l'amorce de la manoeuvre de mise en stationnement, commander le mouvement du véhicule (204) de telle sorte que l'axe médian (210) du véhicule (204) soit tangentiel à la première partie de la trajectoire de mise en stationnement (216) ;
commander encore le mouvement du véhicule (204) le long de la deuxième partie de telle sorte que l'axe médian (210) du véhicule (204) soit tangentiel à la deuxième partie de la trajectoire de mise en stationnement (216) ; et
positionner le véhicule (204) dans la place de stationnement libre (202), l'axe médian (210) du véhicule (204) s'alignant sur l'axe médian (214) de la place de stationnement libre (202) ;
**caractérisé en ce que**
le procédé comprend en outre
obtenir un rayon de braquage extérieur (R) du véhicule (204), le rayon de braquage extérieur (R) étant une distance entre un point central du premier cercle de mouvement limitatif (206) et une partie saillante en position extérieure extrême (308) du véhicule (204) ;
définir un troisième cercle de mouvement limitatif (306) avec le rayon de braquage extérieur (R) afin d'éviter une collision avec des objets positionnés à proximité du véhicule (204) ; et
lors de l'amorce de la manoeuvre de mise en stationnement, déterminer une région de surveillance (310) au sein du troisième cercle de mouvement limitatif (306) par rapport à une position variable du véhicule (204) au cours de l'intégralité de la manoeuvre de mise en stationnement, la région de surveillance (310) étant surveillée au cours de la manoeuvre de mise en stationnement afin d'éviter une collision avec des objets en mouvement, notamment d'autres véhicules.

2. Procédé selon la revendication 1, le procédé comprenant :
déterminer une partie intermédiaire de la trajectoire de mise en stationnement (216), la partie intermédiaire reliant de manière tangentielle la première partie de la trajectoire de mise en stationnement (216) et la deuxième partie de la trajectoire de mise en stationnement (216) ; et
commander le mouvement du véhicule (204) le long de la partie intermédiaire de la trajectoire de mise en stationnement (216).

3. Procédé selon la revendication 1 ou 2, le procédé comprenant en outre :
déterminer une troisième partie de la trajectoire de mise en stationnement, la troisième partie passant de manière tangentielle le long de la deuxième partie de la trajectoire de mise en stationnement (216) et étant en outre dirigée le long de l'axe médian (214) de la place de stationnement libre (202) ; et
commander le mouvement du véhicule (204) le long de la troisième partie de la trajectoire de mise en stationnement (216) jusqu'à ce que le véhicule (204) soit positionné dans la place de stationnement libre (202).

4. Procédé selon l'une des revendications précédentes, le procédé comprenant :
déterminer une distance (D) à parcourir par le véhicule (204) avant de commencer la mise en stationnement, la distance (D) étant une distance longitudinale entre le point médian (208) de l'essieu arrière et l'axe médian (214) de la place de stationnement libre (202), et la distance longitudinale étant supérieure ou égale à deux fois le diamètre du premier cercle de mouvement limitatif (206) ou du deuxième cercle de mouvement limitatif (212).

5. Procédé selon l'une des revendications précédentes, dans lequel le premier cercle de mouvement limitatif (206) et le deuxième cercle de mouvement limitatif (212) ne se chevauchent pas.

6. Véhicule comportant un système d'assistance au stationnement (100), le système (100) comprenant :
des capteurs (102) servant à identifier une place de stationnement libre (202) ;
un module de calcul de trajectoire (114), qui sert à :
obtenir un rayon de braquage minimal du véhicule (204) ;
définir un premier cercle de mouvement limitatif (206) présentant un rayon supérieur ou égal à un rayon de braquage minimal du véhicule (204) de telle sorte que le premier cercle de mouvement limitatif (206) passe par un point médian (208) d'un essieu arrière du véhicule (204), et soit tangentiel à un axe médian (210) du véhicule (204) ;
définir un deuxième cercle de mouvement limitatif (212) présentant un rayon supérieur ou égal au rayon de braquage minimal du véhicule (204) de telle sorte que le deuxième cercle de mouvement limitatif (212) soit tangentiel à un axe médian (214) de la place de stationnement libre (202) ; et
déterminer une trajectoire de mise en stationnement (216) pour le véhicule (204), une première partie de la trajectoire de mise en stationnement (216) se trouvant le long d'une partie du premier cercle de mouvement limitatif (206) et une deuxième partie de la trajectoire de mise en stationnement (216) se trouvant le long d'une partie du deuxième cercle de mouvement limitatif (212) ;
un dispositif de commande de véhicule (106), qui sert à :
lors de l'amorce de la manoeuvre de mise en stationnement, commander le mouvement du véhicule (204) de telle sorte que l'axe médian (210) du véhicule (204) soit tangentiel à la première partie de la trajectoire de mise en stationnement (216) ;
commander encore le mouvement du véhicule (204) le long de la deuxième partie de telle sorte que l'axe médian (210) du véhicule (204) soit tangentiel à la deuxième partie de la trajectoire de mise en stationnement (216) ; et
positionner le véhicule (204) dans la place de stationnement libre (202), l'axe médian (210) du véhicule (204) s'alignant sur l'axe médian (214) de la place de stationnement libre (202) ;
**caractérisé en ce que**
le module de calcul de trajectoire (114) sert en outre à obtenir un rayon de braquage extérieur (R) du véhicule (204), le rayon de braquage extérieur (R) étant une distance entre un point central du premier cercle de mouvement limitatif (206) et une partie saillante en position extérieure extrême (308) du véhicule (204) ; et définir un troisième cercle de mouvement limitatif (306) avec le rayon de braquage extérieur (R) afin d'éviter une collision avec des objets positionnés à proximité du véhicule (204) ; et, lors de l'amorce de la manoeuvre de mise en stationnement, déterminer une région de surveillance (310) au sein du troisième cercle de mouvement limitatif (306) par rapport à une position variable du véhicule (204) au cours de l'intégralité de la manoeuvre de mise en stationnement, le système (100) comprenant en outre un module de surveillance (118) servant à surveiller la région de surveillance (310) au cours de la manoeuvre de mise en stationnement afin d'éviter une collision avec des objets en mouvement, notamment d'autres véhicules.

7. Véhicule selon la revendication 6, dans lequel le module de calcul de trajectoire (114) sert à déterminer une partie intermédiaire de la trajectoire de mise en stationnement (216), la partie intermédiaire reliant de manière tangentielle la première partie de la trajectoire de mise en stationnement (216) et la deuxième partie de la trajectoire de mise en stationnement (216), et dans lequel le dispositif de commande de véhicule (106) est également configuré pour commander le mouvement du véhicule (204) le long de la partie intermédiaire de la trajectoire de mise en stationnement (216).

8. Véhicule selon la revendication 6 ou 7, dans lequel le module de calcul de trajectoire (114) sert en outre à déterminer une troisième partie de la trajectoire de mise en stationnement (216), la troisième partie passant de manière tangentielle le long de la deuxième partie de la trajectoire de mise en stationnement (216) et étant en outre dirigée le long de l'axe médian (214) de la place de stationnement libre (202), et dans lequel le dispositif de commande de véhicule (106) est en outre configuré pour commander le mouvement du véhicule (204) le long de la troisième partie de la trajectoire de mise en stationnement (216) jusqu'à ce que le véhicule (204) soit positionné dans la place de stationnement libre (202).

9. Véhicule selon l'une des revendications 6 à 8, dans lequel le module de calcul de trajectoire (114) sert en outre à :
déterminer une ou plusieurs trajectoires de mise en stationnement d'un point de départ (302) du véhicule (204) à un point d'arrivée (304) du véhicule (204) de telle sorte que la ou les trajectoires de mise en stationnement soient situées à l'extérieur du premier cercle de mouvement limitatif (206) et du deuxième cercle de mouvement limitatif (212).

10. Véhicule selon l'une des revendications 6 à 9, dans lequel le dispositif de commande de véhicule (106) sert en outre à :
lors de l'amorce de la manoeuvre de mise en stationnement, commander le mouvement du véhicule (204) sur la ou les trajectoires de mise en stationnement (216) de telle sorte que l'axe médian (210) du véhicule (204) passe de manière tangentielle à travers le deuxième cercle de mouvement limitatif (212) ; et
positionner le véhicule (204) dans la place de stationnement libre (202), l'axe médian (210) du véhicule (204) s'alignant sur l'axe médian (214) de la place de stationnement libre (202).
